# EUROPEAN PATENT APPLICATION

(11) **EP 2 730 681 A1**
(43) Date of publication of application: **14.05.2014**
(21) Application number: 11869163.3
(22) Date of filing: 06.07.2011
(51) Int. Cl.: C25B 11/08, C25B 1/04, C25B 9/00, C25B 11/04

(54) **ELECTRODE FOR ELECTROLYSIS, METHOD FOR PRODUCING SAME, AND ELECTROLYSIS APPARATUS**

(71) Applicant: Hitachi, Ltd., Tokyo 100-8280 (JP)
(72) Inventor: SUGIMASA, Masatoshi, Chiyoda-ku Tokyo 100-8280 (JP)
(74) Representative: Beetz & Partner
(86) International application number: PCT/JP2011/003848
(87) International publication number: WO 2013/005252

(57) **Abstract**

The present invention aims at providing an oxygen electrode using an oxide of a base metal in electrolysis of water and a method for producing the same. The present invention is an electrode for electrolysis 201 that electrolyzes an electrolytic solution to generate hydrogen and includes a conductive base material 204, a base metal oxide 203 formed on a surface of the base material, and a precious metal 202 supported on a surface of the base metal oxide 203, and is characterized in that the precious metal 202 is one or more selected from the group consisting of Au, Ag, and oxides thereof. This configuration allows an electrode to be produced by combining the oxide of the base metal having a large resource amount and an extremely small amount of the precious metal. By using the present method, an oxygen electrode for electrolysis of water can be provided which has no problem associated with a resource amount, a corrosion resistance, and a low overvoltage.

## Description

### Technical Field

The present invention relates to an electrode for electrolysis, a method for producing the same, and an electrolysis apparatus.

### Background Art

Under the influence of carbon dioxide resulting from large consumption of fossil fuel, global warming has seriously increased. Under such a situation, hydrogen has drawn attention as an energy source for the next generation that replaces the fossil fuel. After being used, hydrogen produces only water as an exhaust so that hydrogen is considered to be a clean energy source that results in a reduced environmental load.

As for the production of hydrogen, steam reforming of fossil fuel is most popular, but there are a large number of methods therefor including by-product hydrogen resulting from the production of iron or soda, a thermal decomposition reaction, a photocalytic reaction, a microbial reaction, the electrolysis reaction of water, and the like. In particular, the electrolytic decomposition of water has drawn attention as a truly clean energy production method since, if electric power derived from reproducible energy such as solar power or wind power is used, carbon dioxide emissions during production can be reduced to extremely low levels.

In the electrolytic decomposition reaction of water, an oxygen generation side is in a highly corrosive environment so that an electrode having a high corrosion resistance and a low overvoltage for an oxygen generation reaction is in demand. Accordingly, as electrode materials, platinum and oxides of iridium and ruthenium which are platinum group are generally and widely used. For example, PTL 1 discloses an electrode for electrolysis in which an electrode catalyst layer using a platinum group or an oxide of a platinum groups a main catalyst is provided on a base material and a high-temperature oxide coating having excellent resistances to peeling and corrosion is provided as an intermediate layer between the electrode catalyst layer and the base material.

### Citation List

### Patent Literature

PTL 1: Japanese Patent Application Laid-Open No. 2004-360067

### Summary of Invention

### Technical Problem

Conventionally, as shown in PTL1 or the like, a platinum group material such as platinum, a ruthenium oxide, or an iridium oxide has been used as an electrode catalyst layer. At a potential at which oxygen is generated in the electrolytic decomposition reaction of water, most metals are oxidized. Each of the oxides of iridium and ruthenium has a higher electron conductivity and a lower resistance than those of oxides of the other metals and is therefore used as an oxygen generating electrode. However, platinum is high in cost and the annual production of each of iridium and ruthenium is around 10 tons so that problems arise in terms of material cost and a usable resource amount. Accordingly, it is required to develop a new oxygen electrode having a corrosion resistance and a low overvoltage, while using a material having a large resource amount.

However, oxides of metals other than platinum group, especially oxides of base metals having large productions generally have low electron conductivities and high resistances so that the oxides of the base metals are not appropriate for use as electrodes. In an actual situation, substitute materials for electrodes for electrolysis having properties comparable to those of the platinum group have not been found yet.

In view of the foregoing problems, an object of the present invention is to provide, in an electrode for electrolysis, an oxygen generating electrode having a platinum-group-free configuration, an excellent corrosion resistance, and a low overvoltage.

### Solution to Problem

The present invention is an electrode for electrolysis that electrolyzes an electrolytic solution to generate hydrogen, the electrode for electrolysis including a conductive base material, a base metal oxide formed on a surface of the base material, and a precious metal supported on a surface of the base metal oxide, wherein the precious metal is one or more selected from the group consisting of Au, Ag, and oxides thereof.

With the foregoing structure, the oxygen generating electrode of the present invention can be used as a new oxygen electrode having a corrosion resistance and a low overvoltage and serving as a substitute for high-cost platinum and iridium and ruthenium each having a problem associated with a resource amount, while using the base metal oxide having a larger resource amount but inferior performance as an oxygen electrode.

### Advantageous Effects of Invention

According to the present invention, it becomes possible to produce an electrode by combining an oxide of a base metal having a large resource amount with an extremely small amount of precious metal and provide an electrode for the electrolysis of water having no problem associated with a resource amount, a corrosion resistance, and a low overvoltage.

### Brief Description of Drawings

Figure 1 is a schematic view of an electrolysis apparatus according to the present embodiment.
Figure 2 is a schematic cross-sectional view of an electrode for electrolysis according to the present embodiment.
Figure 3 is a schematic cross-sectional view illustrating a method for producing an electrode by burning according to the present embodiment.
Figure 4 is a schematic cross-sectional view of the electrode for electrolysis according to the present embodiment.
Figure 5 shows an optical microscopic surface image of the electrode for electrolysis according to the present embodiment.
Figure 6 is a schematic cross-sectional view of the electrode for electrolysis according to the present embodiment.
Figure 7 is a schematic cross-sectional view illustrating a wet method for producing an electrode according to the present embodiment.

### Description of Embodiments

A description will be given below of an embodiment of the present invention using the drawings.

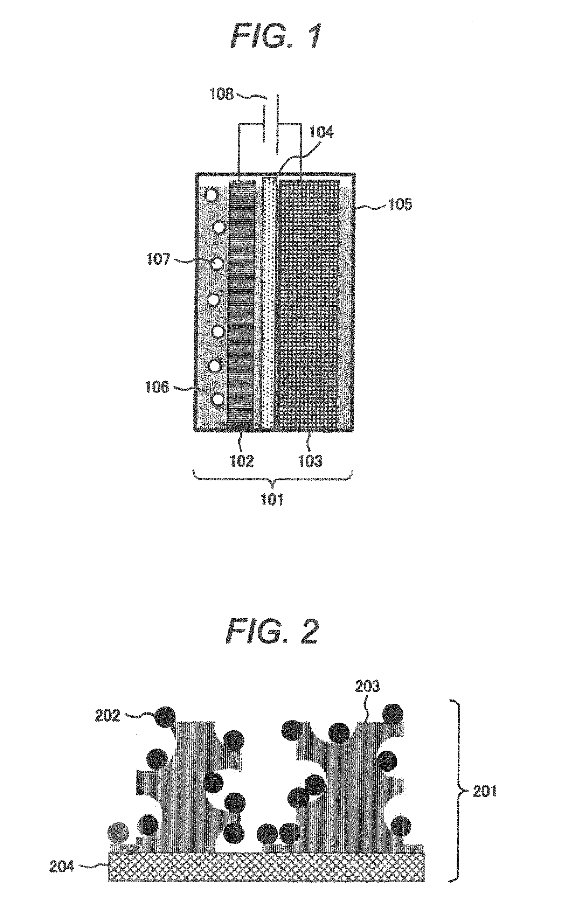

Figure 1 shows an example of a schematic view of a cell of an electrolysis apparatus 101 to which an electrode for electrolysis of the present invention is applied. The cell 101 includes a hydrogen generating electrode 102, an oxygen generating electrode 103, a partition 104, an electrolysis tank 105, and an electrolytic solution 106.
The oxygen generating electrode 103 and the hydrogen generating electrode 102 are placed to face each other with the partition 104 being interposed therebetween. These are inserted into the electrolysis tank 105 and the electrolytic solution 106 is injected therein to be used. The oxygen generating electrode 103 and the hydrogen generating electrode 102 are connected to a load 108, and a voltage is applied between the electrodes to effect electrolysis.

Figure 2 shows a schematic view showing an example of a configuration of an oxygen generating electrode applied to the electrolysis apparatus of the present invention. An oxygen generating electrode 201 includes a conductive base material 204, a base metal oxide 203 formed on the surface thereof, and a precious metal 202 selected from the group consisting of gold, silver, and oxides thereof supported on the base metal oxide 203. In the present invention, supporting indicates a state in which the precious metal 202 is chemically or physically adsorbed to the base metal oxide 203 as a supporting material with a part of the surface of the base metal oxide 203 being exposed. It is sufficient for the oxide generating electrode of the present invention to have a configuration in which the precious metal is supported with a part of the surface of the base metal oxide being exposed so as to form three-phase interfaces between the electrolytic solution, the base metal oxide, and the precious metal, and the shape thereof is not particularly limited. In Figure 2, a configuration is shown in which the fine grains of the precious metal 202 are supported on the surface of the base metal oxide 203 in a shape having an increased specific surface area for increasing a reaction area. It is more preferable to provide a structure which can thus increase the specific surface area of the electrode and increase the three-phase interfaces between the electrolytic solution, the base metal oxide, and the precious metal. With this configuration, it is possible to provide a platinum-group-free oxygen generating electrode having an excellent corrosion resistance and a lower overvoltage. The details thereof will be described below.

The base metal oxide is resistant to a corrosive environment and has an activity to an oxygen generation reaction, but has the problems of a low electric conductivity and a high reaction resistance at a potential at which the oxygen generation reaction proceeds. So far, the base metal oxide has not been able to exert sufficient performance as an oxygen generating electrode. On the other hand, gold, silver, and oxides thereof have low resistances and have been widely used as electrode materials. However, due to the high overvoltages thereof needed for the oxygen generation reaction to proceed, the performance thereof as oxygen generating electrodes is inferior. In particular, the low surface reactivity of gold and the inactiveness thereof to the oxygen generation reaction are considered to be responsible for the high overvoltage thereof. Thus, the base metal oxide and the precious metal each used for the oxygen generating electrode of the present invention cannot provide sufficient properties when used alone as the oxygen generation electrode. However, as a result of conducting vigorous study thereon, the present inventors have found that, by combining the base metal oxide with the precious metal such that three-phase interfaces are formed between an electrolytic solution, a base metal oxide, and a precious metal as in the oxygen generating electrode of the present invention, excellent properties of an oxygen generating electrode can be obtained. That is, the electrode of the present invention has a configuration in which the precious metal is supported on the surface of the base metal oxide. Since the precious metal is unlikely to be oxidized and resistant to corrosion, the precious metal has a conductivity even at a potential at which the oxygen generation reaction proceeds. Accordingly, by using the precious metal as a transmission path for electrons, the reaction resistance of the base metal oxide can be reduced. The present inventors have also recognized that a catalytic activity tends to increase at the interface between the metal oxide and the precious metal. This may be conceivably because water is easily adsorbed to the highly adsorptive surface of the precious metal and therefore the effect of improving the speed of the electrolysis reaction is expected. It may also be considered that, when the precious metal is used alone, generated oxygen molecules are strongly adsorbed to the surface thereof to inhibit an electrolysis reaction but, since the base metal oxide causes negative charges to be generated on the surface of the precious metal to reduce the adsorption of oxygen, the catalytic activity is increased by the effect of suppressing the inhibition of the reaction. Note that, in terms of reducing the reaction resistance of the base metal oxide, the effect can be obtained by mixing the precious metal in the base metal or supporting the base metal oxide on a surface of a precious metal structure without supporting the precious metal. However, since the three-phase interfaces described above are not formed, a sufficient catalytic activity cannot be obtained. In addition, compared to the case where the precious metal is supported on the surface, the used amount of the precious metal increases to also cause a cost increase. Accordingly, it is preferable to use a configuration in which the precious metal is supported on the surface of the base metal oxide.

Thus, in the electrode of the present invention, an extremely small amount of precious metal is supported on the surface of the base metal oxide to implement a high-activity oxide electrode due to the effect of improving the conductivity and the effect of activating the performance of the catalyst at the interfaces each achieved by the precious metal, while suppressing a member cost.

The base metal oxide used in the oxygen generating electrode of the present invention is formed of any one metal of Ni, Mo, Nb, Ta, Ti, Zr, Fe, Mn, W, and Sn and an alloy formed of a plurality thereof. For the base metal oxide, Ni, Fe, or Mn having a high catalytic activity to the oxygen generation reaction is preferably used. In particular, Mn has a high oxygen generation activity to salt water and is particularly preferred in the case of electrolyzing the salt water to produce hydrogen and oxygen. Since an oxygen generation potential is in a corrosive environment, in terms of providing the electrode with a longer lifetime, Nb, Ta, Ti, Zr, Mn, and W each having a high corrosion stability are preferably used in a combination. In terms of a usable resource amount, Ti or Fe is desired to be used.

The shape of the base metal oxide is not particularly limited as long as a large specific surface area is provided, but a porous shape, a granular shape, a columnar shape, a plate-like, or a tree-like shape is preferred. To increase the specific surface area of the electrode, the miniaturization of the structure is effective, but excessive miniaturization leads to a reduction in the strength of the electrode. Accordingly, as the specific surface area, an actual surface area is preferably 10 to 1000 times as large as an apparent surface area.

The precious metal supported on the surface of the base metal oxide is formed of any one of Au, Ag, and oxides thereof or a combination of a plurality thereof. Ag has a catalytic activity to the oxygen generation reaction, a high conductivity, a low price, and a large production and is therefore desirable as the electrode material of the present invention. Au does not have a catalytic activity to the oxygen generation reaction when it is in the form of bulk, but is expected to show a catalytic activity when formed into nanograins. Au also has a high corrosion resistance and can be used in an environment which is more corrosive than the environment in which Ag is used.

Preferably, the precious metal is in the form of fine grains. Au, Ag, and oxides thereof are higher in price than a base metal and, for the purpose of reducing a material cost also, the used amount of the precious metal needs to be reduced. However, excessive miniaturization causes a reduced strength and is therefore not preferable. Accordingly, the precious metal fine grains preferably have sizes of about 1 to 100 nm, or more preferably 1 to 20 nm. To exhibit stable electrode performance, it is preferable that the precious metal fine grains are uniformly and highly dispersed over the surface of the base metal oxide, but present no problem if they are agglomerated. In terms of improving the conductivity, the precious metal may also be supported in the form of a thin film or a line. However, uniformly supporting the precious metal in the form of a thin film or a line on the surface of the base metal oxide having a large specific surface area is technically difficult and leads to an increase in production cost. Therefore, the precious metal is preferably supported in the form of fine grains. When a high conductivity is required, it is appropriate to increase the supported amount of the precious metal and promote the agglomeration of the fine grains.

At the interface between the precious metal and the base metal oxide, the function of implementing a higher catalytic activity which accelerates the oxygen generation reaction can be expected. Accordingly, the precious metal and the base metal oxide preferably have a longer interface therebetween. To maximize the interface, the precious metal is preferably in the form of fine grains. The ratio between the area occupied by the precious metal and the area occupied by the base metal oxide at the surface of the electrode is ideally 1:1. However, if consideration is given to the difficulty of production, it is appropriate for the surface area of the precious metal to be about 30 to 70% of the surface metal of the base metal oxide supporting material, and more preferably within the range of 40 to 60% thereof.

The base material that supports the base metal oxide and the precious metal may appropriately have a conductivity and is not particularly limited as long as it is a metal material. However, in terms of cost, Fe may be used appropriately and, in terms of corrosion resistance, Ni or Ti may be used appropriately. Alternatively, a carbon material may also be used as the base material as long as the adhesion thereof to the base metal oxide can be maintained. It is also preferable to form the surface of a base plate in an uneven shape and increase the specific surface area of the base plate. At that time, an actual surface area is preferably 10 to 1000 times as large as an apparent surface area. By thus forming the base metal oxide on the base material having the increased specific surface area, the same effect as obtained by increasing the specific surface area of the base metal oxide described above can be obtained.

A method for producing the oxygen generating electrode of the present invention is not particularly limited as long as the configuration described above can be produced thereby. However, if consideration is given to the simplicity and cost of the production, a dry method in which application and burning are repeated or a wet method using electrolytic deposition may be used appropriately.

In the dry method, a solvent containing a base metal salt is applied first to a surface of a conductive base material and burnt in air to produce a base metal oxide. At this time, the type of the base metal salt and the type of the solvent are not particularly limited as long as the base metal oxide can be produced by burning. When the base material is a metal, the different thermal expansion coefficients cause a crack in the base metal oxide so that, even when the solvent is simply applied and burnt, a large specific surface area is obtainable. However, when extremely small organic structures such as micelles of a surface active agent or polystyrene beads are mixed in the solvent, the portions containing the organic structures become voids when subjected to burning, which allows the base metal oxide having an extremely large specific surface area to be produced. The types, concentrations, and sizes of the organic structures are not particularly defined and may be selected appropriately depending on a desired base metal oxide. The total amount of the base metal oxide can be adjusted with the number of times the application/burning is performed or the concentration of the base metal salt and the viscosity of the solvent. It is also possible to consecutively form different types of base metal oxides. When a base metal oxide having poor adhesion to the base material is intended to be used, it is also possible to form a base metal oxide having the effect of improving adhesion and then form the base metal oxide intended to be used.

After the base metal oxide is formed, a solvent containing a precious metal salt is applied and burnt to thus complete the electrode supporting the precious metal on the surface of the base metal oxide. The type of the precious metal salt and the type of the solvent are not particularly defined but, to cause high dispersion of the precious metal fine grains, a solvent having an excellent wettability is preferred, and a low-molecular-weight alcohol such as methanol, ethanol, propanol, or butanol may be used appropriately. The amount of the supported precious metal fine grains, the sizes thereof, and the dispersibility thereof can be adjusted with the number of times the application/burning is performed or the concentration of the base metal salt and the viscosity of the solvent.

The dry method is a simple, convenient, and low-cost production method which allows an electrode to be produced by merely repeating the application/burning of a solution containing a salt.

In the wet method, a conductive base material is dipped together with a counter electrode in a solvent containing a base metal salt, and a voltage is applied thereto to cause electrolytic deposition. When anode deposition is caused on an oxidation potential side, a base metal oxide can be produced directly on the surface of the base material. Alternatively, the base metal oxide can also be produced by causing cathode deposition of a base metal on a reduction potential side and then burning the deposited base metal in air. While the dry method is allowed at most to change the organic structures and control the structure of a porous material, the wet method is advantageous in that the shape of the base metal oxide can be controlled relatively easily to a columnar shape, a plate-like shape, a tree-like shape, or the like with the type of an additive, deposition conditions, or the like.

When the conductivity of the produced base metal oxide is high, it is also possible to support the precious metal by electrolytic deposition. In this case, the sizes and dispersibility of the precious metal fine grains can be controlled by an electrolytic deposition method such as a pulse electrodeposition method, a constant potential method, or a constant current method. It may also be possible to control the shapes or sizes of the precious metal fine grains using an additive.

The production method may also be such that the precious metal fine grains are supported by the dry method on the surface of the base metal oxide produced by the wet method, and vice versa. Another method may also be used, and commercially available nanograins of a precious metal may also be supported on the surface of the produced base metal oxide.

In the electrolysis apparatus in the present embodiment, the hydrogen generating electrode 102 has a role to accelerate a reaction in which water is reduced to generate hydrogen. The hydrogen generating electrode 102 preferably has a large specific surface area, and more preferably is in the form of a porous material, a net, or an unwoven fabric. On the surface thereof, nanostructures or the like may also be produced appropriately. To cause a hydrogen generation reaction with lower power, for the hydrogen generating electrode, a platinum group showing a lower hydrogen overvoltage such as Pt, Rh, or Ir is used preferably. Since the platinum group is high in cost, Ni, Fe, or the like which is lower in price may also be used. Alternatively, Ni, Fe, or the like may also be alloyed with a platinum groupto be used.

The electrolytic solution 106 is not particularly limited but, to inhibit corrosion of the electrode and the electrolytic tank, an aqueous alkaline solution is used preferably.

A material for the partition 104 is not particularly defined, but a high-stability resin which is not dissolved in an aqueous solution is preferred. Examples of the high-stability resin include polyimide, polyethylene, and the like. In the case of a resin, it is necessary for the resin to be in the form of a porous material or sponge so as to allow ions to move therein. Alternatively, an ion conductive resin having the combined properties of an electrolyte and a partition may also be used. In particular, when a proton conductive resin is used, an aqueous solution is not needed on an oxygen electrode side, while water is not needed on a hydrogen electrode side, and only pure hydrogen is provided. This eliminates the need for vapor-liquid separation and facilitates power generation.

In the production of hydrogen by electrolysis of water, to reduce cost for hydrogen, reductions in the amount of consumed power and member cost are strongly demanded. The electrode of the present embodiment has a large specific surface area, a low oxygen generation overvoltage, and a low member cost and is therefore preferable as an oxygen electrode in an apparatus for producing hydrogen.

Best modes for carrying out the present invention will be described below using specific examples. However, the present invention is not limited to the following examples.

### Example 1

Figure 2 shows a schematic cross-sectional view of the oxygen generating electrode 201 in the present example. The oxygen generating electrode 201 includes the precious metal fine grains 202, the base metal oxide 203, and the conductive base material 204. The base metal oxide 203 has a large specific surface area and the precious metal fine grains 202 are supported in a highly dispersed form on the entire base metal oxide 203.

For the evaluation of the electrode, the evaluation of the surface shape thereof was performed by optical microscopy, the evaluation of the cross-sectional shape thereof was performed by SEM, and the evaluation of the grain sizes of the precious metal fine grains was performed by XRD. The evaluation of the electrochemical property thereof was performed in 1 mol/L of an aqueous KOH solution in a 3-electrode method. For a reference electrode, silver/silver chloride was used while, for a counter electrode, platinum mesh was used. From the rise of an oxygen generation potential and the magnitude of a current value at a given potential, the catalytic activity of the electrode to an oxygen generation reaction was evaluated.

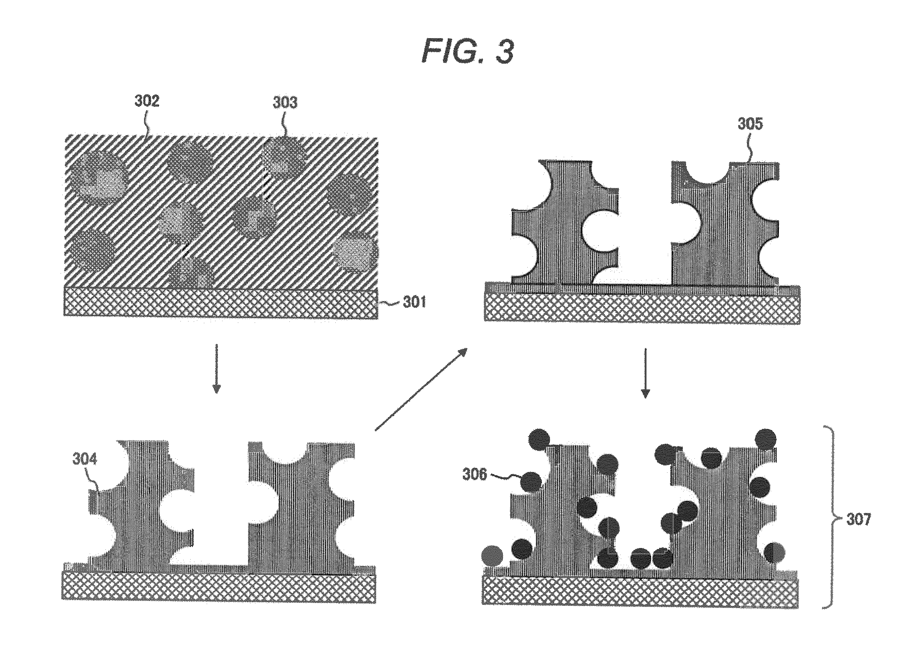

In Example 1, Au was selected as the precious metal fine grains 202, a Ti oxide was selected as the base metal oxide 203, and a Ti plate was selected as the base material 204. As an electrode production method, a dry method was used. Figure 3 is a schematic view showing an example of an electrode production process in accordance with the dry method. First, to a base material 301 (Ti plate), a solvent 302 in which 5 wt% of a water-soluble Ti complex was dissolved in water was applied. In the solvent 302, sodium dodecyl sulfate was contained to form organic structures 303 in the form of micelles. The Ti plate to which the solvent 302 had been applied was dried in air at 160 °C for 2 hours and then burnt at 500°C for 10 minutes to form a base metal oxide 304 made of TiO₂. Further, a butanol solution 305 containing 1 wt% of a chlorauric acid was applied and then burnt at 500 °C for 1 hour to obtain an electrode 307.

The electrode 307 was further subjected to XRD measurement and the formation of Au fine grains 306 each having a crystallite size of 26 nm was recognized. Then, the catalytic activity of the electrode was evaluated. As a result of measuring a current value at 0.7 V, an oxygen generation current of 26 mA could be observed.

### [Comparative Example 1]

In Comparative Example 1, the properties of an electrode in which a Ti oxide was formed as the base metal oxide on the surface of the Ti base material were evaluated. A production method was equal to that in Example 1.

The electrode having a surface shape equal to that in Example 1 was obtained. On the other hand, a current value at 0.7 V was 2 mA.

### Example 2

In Example 2, Ag was selected as the precious metal fine grains, an oxide of a NiTi alloy was selected as the base metal oxide, and a Ti plate was selected as the base material. An electrode was produced in the same method as in Example 1 except that, to form the oxide of the NiTi alloy on the surface of the Ti plate, a solvent in which a Ni sulfate and a water-soluble Ti complex were dissolved in water was used.

As the surface shape, a remarkably uneven surface was obtained in the same manner as in Example 1. The crystallite size of Ag was 35 nm. A current value at 0.7 V was 32 mA, and an activity comparable to that in Example 1 could be recognized.

### [Comparative Example 2]

In Comparative Example 3, the properties of an electrode in which a NiTi alloy oxide was formed as the base metal oxide on the surface of the Ti base material were evaluated. A production method was equal to that in Example 2.

The electrode having a surface shape equal to that in Example 1 was obtained. On the other hand, a current value at 0.7 V was not more than 1 mA.

### Example 3

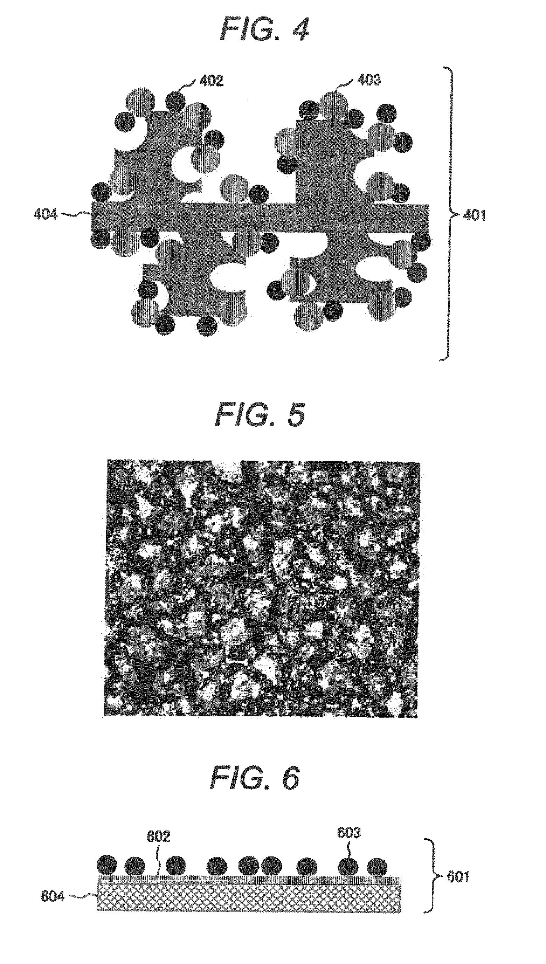

In Example 3, the properties of an electrode using a Ti Plate having an increased specific surface area as the base material were evaluated. Au was selected as the precious metal fine grains, and a Ti oxide was selected as the base metal oxide. Figure 4 shows a cross-sectional schematic view of an electrode 401 in the present example.

As a base material 404, the Ti plate having a large specific surface area was produced by dipping the Ti plate in 10 wt% of an aqueous oxalic acid solution heated to 85 degrees for 60 minutes and etching the surface thereof. Subsequently, a water solvent containing 5 wt% of a water-soluble Ti complex was applied and then burnt to thus support Ti oxide fine grains 403. Further, a butanol solution containing 1 wt% of a chlorauric acid was applied and then burnt again to support Au fine grains 402 on the surfaces of the Ti oxide fine grains 403. Figure 5 shows an optical microscopic surface image of the electrode 401. A markedly uneven surface can be recognized. Further, the electrode 401 was subjected to XRD measurement, and the formation of the Au fine grains 402 each having a crystallite size of 20 nm was recognized. Then, the catalytic activity of the electrode was evaluated. As a result of measuring a current value at 0.7 V, an oxygen generation current of 25 mA could be observed.

### Example 4

In Example 4, the properties of an electrode were evaluated which had a configuration in which a thin film of a base metal oxide 602 was formed on a base material 604 shown in Figure 6 and precious metal fine grains 603 were supported on the base metal oxide 602. In the present example, a Ti plate was used as the base material 604, a Ti oxide was used as the base metal oxide 602, and Au was used as the precious metal fine grains. The thin film of the Ti oxide was produced by applying a solvent in which a water-soluble Ti complex was dissolved in water to the Ti base material a plurality of times. The thickness of the thin film of the Ti oxide was 129 nm, and the Au fine grains each having a grain size of about 50 nm were supported in a highly dispersed form on the surface thereof. As a result of measuring a current value at 0.7 V, an oxygen generation current of 17 mA could be observed.

### [Comparative Example 3]

In Comparative Example 3, the properties of an electrode were evaluated in which an Au thin film was caused to be supported by sputtering on the surface of a Ti base material formed with a thin film of a Ti oxide. A method for producing the Ti thin film is equal to that in Example 4.

The XRD peak of the Au thin film supported on the flat thin film of the Ti oxide was broad, and an average crystallite size could not be obtained. On the other hand, a current value at 0.7 V was not more than 1 mA.

### Example 5

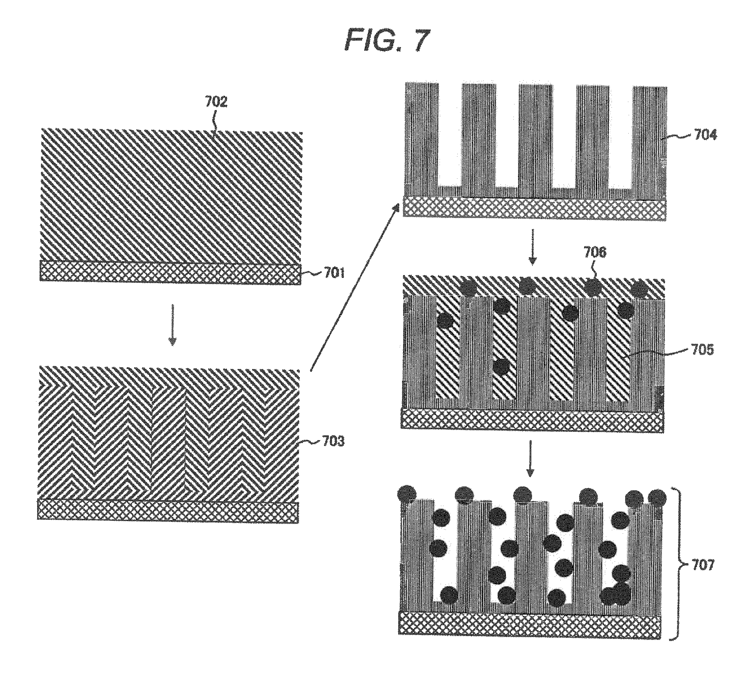

In Example 5, Au was selected as the precious metal fine grains, a Ni oxide was selected as the base metal oxide, and a Ni plate was selected as the base material. As an electrode production method, a wet method was used. Figure 7 shows a schematic view of an example of an electrode production process in accordance with the wet method. First, a base material 701 was dipped in an aqueous solution 702 in which 10 wt% of NiSO₄ was dissolved. To the aqueous solution 702, 5 wt% of sodium dodecyl sulfate was added as an additive for achieving an increase in the specific surface area of a deposit. Using Ni mesh as a counter electrode, plate-like Ni structures 703 each having a large specific surface area were electrolytically deposited under a constant voltage condition for cathode deposition. After the electrolytic deposition, the Ni structures 703 were cleaned with pure water and burnt in air at 500 °C for 1 hour to obtain a Ni oxide 704 having plate-like structures. The Ni oxide 704 was dipped in an aqueous solution 705 containing 2 wt% of a chlorauric acid, and a constant voltage was applied between Pt and the counter electrode to electrolytically deposit Au fine grains 706. Thereafter,
the Au fine grains 706 were cleaned with pure water, dried, and then burnt again at 500 °C for 1 hour to obtain an electrode 707.

As a result of observation by cross-sectional SEM, it could be recognized that the Ni oxide 704 formed the plate-like structures each having a vertical width of 300 to 500 nm, a lateral width of 20 to 100 nm, and a height of 1 µm. The electrode 707 was further subjected to XRD measurement, and the formation of the Au fine grains 706 each having a crystallite size of 12 nm was recognized. Note that, in Example 5, the ratio of the Au fine grains to the surface was determined by calculation. When the surface area was calculated on the assumption that the Ni oxide has a shape of 500 nm x 100 nm x 1 µm, the ratio of the Au fine grains to the surface area was about 60%. A current value at 0.7 V was 127 mA.

### [Comparative Example 4]

In Comparative Example 4, a Ni oxide was formed on the surface of a Ni base material. A production method was the same as in Example 5. The Ni oxide formed plate-like structures in the same manner as in Example 5. A current value at 0.7 V was 91 mA.

### Example 6

In Example 6, Au was selected as the precious metal fine grains, an oxide of Mn was selected as the base metal oxide, and a Ni plate was selected as the base material. As an electrode production method, a wet method and a dry method were combined. First, the Ni plate was dipped in 0.1 mol/L of an aqueous NaSO₄ solution in which 10 wt% of MnSO₄ was dissolved, and MnOₓ was deposited on the surface of the Ni plate under a constant voltage condition for anode deposition. After the electrolytic deposition, the Ni plate with MnOₓ was cleaned with pure water and dried in air at 250°C for 1 hour. Further, to the surface, a butanol solution containing 1 wt% of a chlorauric acid was applied and burnt at 300 °C for 1 hour to be changed into an electrode.

As a result of observing the surface structure, the Mn oxide formed the same markedly uneven surface as that formed by the Ti oxide in Example 1 shown in Figure 2. The grain size of each of Au fine grains was 8 nm. Note that, in Example 6, the surface area was calculated from the amount of the Mn oxide per unit area and the crystallite size. As a result, the ratio of the Au fine grains to the surface was about 50%. A current value at 0.7 V was 190 mA.

It could also be recognized that, even in 10 wt% of an aqueous NaCl solution, an electrolysis reaction proceeded and the surface structure of the electrode could be maintained.

The electrode in the present example has a high oxygen generation activity to salt water and can also produce hydrogen and oxygen by, e.g., electrolyzing sea water.

### Reference Signs List

- 101: Cell
- 102: Hydrogen Generating Electrode
- 103: Oxygen Generating Electrode
- 104: Partition
- 105: Electrolytic Tank
- 106: Electrolytic Solution
- 201: Oxygen Generating Electrode
- 202: Precious Metal
- 203, 304, 602: Base Metal Oxides
- 204, 301, 604, 701: Base Materials
- 302: Solvent
- 303: Organic Structure
- 305: Solution
- 306, 402, 706: Au Fine Grains
- 307, 401, 601, 707: Electrodes
- 401: Ti Oxide Fine Grains
- 603: Precious Metal Fine Grains
- 702, 705: Aqueous Solutions
- 703: Ni Structure with Large Specific Surface Area
- 704: Ni Oxide

## Claims

1. An electrode for electrolysis that electrolyzes an electrolytic solution to generate hydrogen, the electrode for electrolysis comprising:
a conductive base material;
a base metal oxide formed on a surface of the base material; and
a precious metal supported on a surface of the base metal oxide, wherein
the precious metal is one or more selected from the group consisting of Au, Ag, and oxides thereof.

2. The electrode for electrolysis according to claim 1, wherein the precious metal is supported so as to expose the surface of the base metal oxide.

3. The electrode for electrolysis according to claim 2, wherein the base metal oxide is formed of an oxide of any one of Ni, Mo, Nb, Ta, Ti, Zr, Fe, Mn, W, and Sn or a combination of a plurality thereof.

4. The electrode for electrolysis according to claim 2, wherein the base metal oxide has a configuration which is any of a porous shape, a granular shape, a columnar shape, a plate-like shape, and a tree-like shape and an actual surface area which is 10 to 1000 times as large as an apparent surface area thereof.

5. The electrode for electrolysis according to claim 2, wherein the base material has unevenness in a surface thereof and an actual surface area which is 10 to 1000 times as large as an apparent surface area thereof.

6. The electrode for electrolysis according to claim 2, wherein the precious metal has a granular shape and a size of 1 to 100 nm.

7. The electrode for electrolysis according to claim 2, wherein a surface area of the precious metal is 40 to 60% of a surface area of the base metal oxide supporting material.

8. An electrolysis apparatus, comprising:
a hydrogen generating electrode and an oxygen generating electrode each disposed to come in contact with an electrolytic solution, wherein
the oxygen generating electrode includes a conductive base material, a base metal oxide formed on a surface of the base material, and a precious metal supported on a surface of the base metal oxide, and
the precious metal is one or more selected from the group consisting of Au, Ag, and oxides thereof.

9. The electrolysis apparatus according to claim 8, wherein the precious metal is supported so as to expose the surface of the base metal oxide.

10. The electrolysis apparatus according to claim 9, wherein the base metal oxide is formed of an oxide of any one of Ni, Mo, Nb, Ta, Ti, Zr, Fe, Mn, W, and Sn or a combination of a plurality thereof.

11. The electrolysis apparatus according to claim 9, wherein the base metal oxide has any of a porous shape, a granular shape, a columnar shape, a plate-like shape, and a tree-like shape and an actual surface area which is 10 to 1000 times as large as an apparent surface area thereof.

12. The electrode for electrolysis according to claim 9, wherein the base material has unevenness in a surface thereof and an actual surface area which is 10 to 1000 times as large as an apparent surface area thereof.

13. The electrode for electrolysis according to claim 9, wherein the precious metal has a granular shape and a size of 1 to 100 nm.

14. The electrode for electrolysis according to claim 9, wherein a surface area of the precious metal is 40 to 60% of a surface area of the base metal oxide supporting material.

15. A method for producing an electrode for electrolysis that electrolyzes an electrolytic solution to generate hydrogen, the method comprising the steps of:
forming a base metal oxide on a surface of a conductive base material; and
supporting one or more precious metal selected from the group consisting of Au, Ag, and oxides thereof on a surface of the base metal oxide.

16. The method for producing an electrode for electrolysis according to claim 15, wherein a solvent containing a base metal salt is applied to the surface of the base material and burnt to form the base metal oxide on the surface of the base material, and then a solvent containing a salt of the precious metal is applied to the base metal oxide and burnt to cause the precious metal to be supported on the surface of the base metal oxide.

17. The method for producing an electrode for electrolysis according to claim 15, wherein a base metal or a base metal compound is deposited on the surface of the base material through electrolytic deposition in the solution and burnt to produce an oxide, and then the precious metal is deposited in a solution containing a salt of the precious metal to be supported on the surface of the base metal oxide.
